# EUROPEAN PATENT APPLICATION

(11) **EP 1 193 633 A2**
(43) Date of publication of application: **03.04.2002**
(21) Application number: 01307312.7
(22) Date of filing: 29.08.2001
(51) Int. Cl.: G06F 17/60

(54) **Network system**

(30) Priority: 29.08.2000 JP 2000259849
(71) Applicant: Mori Seiki Co., Ltd., Yamatokoriyama-shi, Nara 639-1160 (JP)
(72) Inventor: Goto, Takenori, Yamatokoriyama-shi, Nara 639-1160 (JP); Hatakenaka, Masahiko, Yamatokoriyama-shi, Nara 639-1160 (JP)
(74) Representative: Watson, Robert James

(57) **Abstract**

A network system comprising an order-placing server and an order-receiving server, in which the order-placing server prepares "an order-placing page" corresponding to an order-placed destination for selected parts, and means transmits "the order-placing page" to a recognition step of the order-receiving server; and the order-receiving server validates a log-in name included in the order-placing page sent to the recognition step, and recognizes parts number included in the information of the order-placing page to retrieve the part information of the parts number from a data base.

## Description

### BACKGROUND OF THE INVENTION

### 1.Field of the Invention

The present invention relates to a system that places and receives an order for parts using a computer network.

### 2.Description of Prior Art

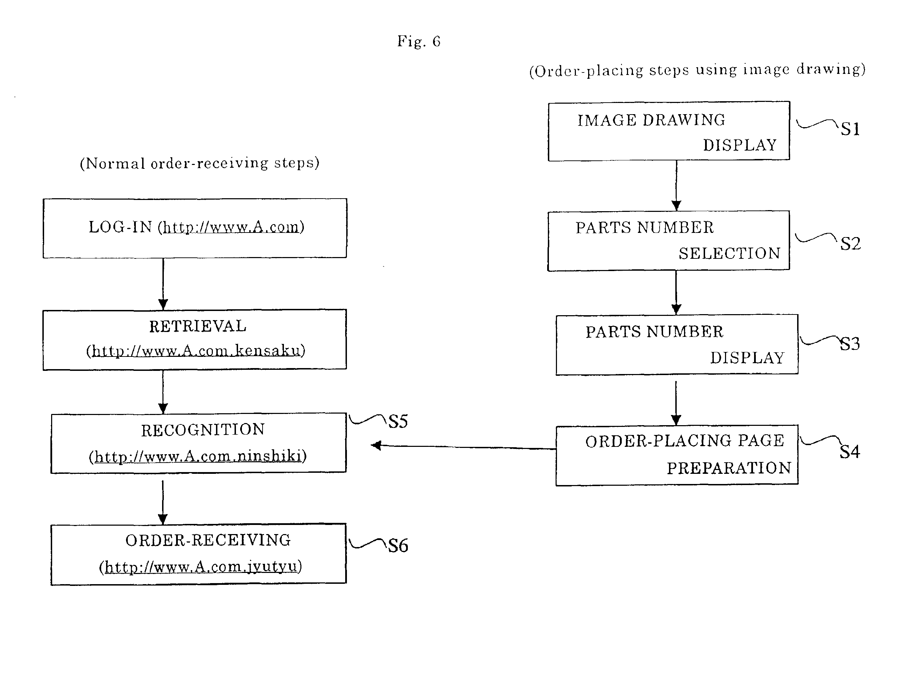

Heretofore, an order for parts has been received via a home page (HP) of the Internet. The process of order-receiving, as shown in Fig. 6 (a normal order-placing step), comprises a log-in step, a parts-retrieval step, a recognition step, followed by an order-placing step.

The object of requiring the log-in step is to request the input of a user name and a password so that only a verified user is authorized to use the system in order to prevent illegal order-placing and to maintain the system.

The reason why the parts-retrieval step is required is that when the input such as parts number and parts name is requested without precaution, the user is rushed to look up the parts number and the like, lowering the convenience. Also, the reason is to prevent errors made in order-placing.

The recognition step is used to retrieve the number in stock and price of the parts the user desires, to display the parts information and to verify the request of the order-placing.

The order-receiving step allows the information verified in the recognition step to be stored in a storage means and performs subsequently the delivery of parts and the procedure of charging the price for parts.

The above order-receiving systems is usually executed using forms unique to companies who sell the parts; as a result, the forms are not interchangeable with each other.

Thus, the above order-receiving systems use the parts-retrieval step to facilitate the identification of the parts. The retrieval step uses a method of displaying parts list by parts category or by application or of displaying a parts list by price range. The retrieval step is easy-to-use for parts that can be easily identified and for experts who often place an order for parts.

However, when a user identifies parts for, for instance, cargo crafts, airplanes, various plants and machine tools in which the number of parts is hundreds to thousands, the above-described retrieval step is insufficient. In particular, beginners are often not able to identify parts, and it takes a long time to retrieve. This is because even parts having similar names and shapes are different in the material and dimensional accuracy from each other when such parts are used in different purposes. This is also because the number of parts used in one machine is enormous, and most of the parts number and parts name are formed by combining alphabet with numerals, so that it is difficult to identify parts by the parts number and the like. Therefore, the prior art order-receiving systems used in a field that involves numbers of parts requires a substantial amount of work to identify parts, thus creating an additional cost due to the errors in order-placing for parts and the like.

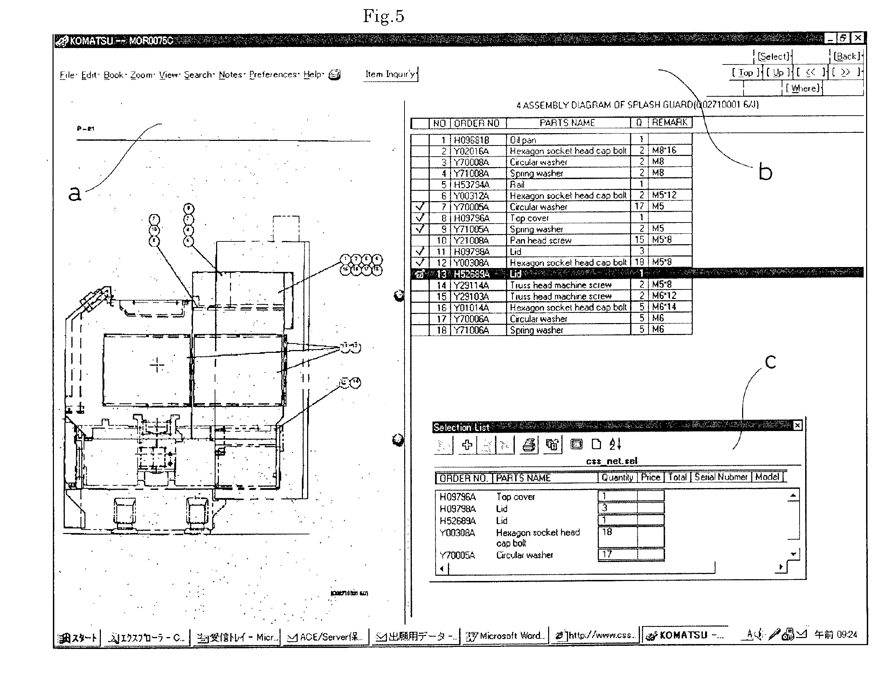

For machines having such numbers of parts, there exits a parts order-placing system that uses a machine image drawing, including a CSS-Net system performed by Komatsu Co., Ltd. The identification of parts in this system will be described with reference to Fig. 5. The screen "a" on the left side of Fig. 5 shows a sectional view of a machine that involves numbers of parts, wherein the respective parts are referred to by circled numerals. The parts with the circled numerals are shown with each parts number and parts name in the screen "b" in the upper right side of Fig. 5, thereby allowing the user (utilizing person) to easily understand the parts.

As seen from the CSS-Net system, in the system that uses an image drawing, parts can be identified not only by using the category of parts but also by using various sectional views, so that the problems with the identification of parts is solved. In particular, the system provides a huge advantage to those who are not experienced well in identifying the parts.

However, in the order-placing system that uses image drawings, there is a disadvantage in that due to the operation according to the image drawing, an additional time to transmit the image drawing is required, necessitating a longer time than the normal retrieval step.

To identify the parts on the network via the image drawing, a high-performance server capable of displaying image drawings having a large amount of data is required as well as a significant cost.

Thus, it is difficult to identify the parts of a machine that involves a large number of parts when a normal retrieval step is performed. On the other hand, in an order-placing system that uses an image drawing, the problem is that it takes time to identify the parts, though the identification of parts becomes easy.

Further, a high-performance server used in a system that uses an image drawing requires a significant cost. Thus, such a system has been used in the order-placing process for parts of a plurality of manufacturers rather than for a single one manufacturer. However, as described above, an order-receiving system for parts has been operated in a unique form by various companies. Hence, even if parts are identified by the system that uses image drawings, the information on parts thus identified could not be linked "as is" to the order-receiving system of various companies.

Hence, the user of the system that uses image drawings identifies the parts by the system to verify the parts number and the like. Then, the user must perform steps such as accessing the order-receiving HP (home page) of a manufacturer dealing with the parts and passing through the log-in step, at the retrieval step, inputting the parts number, identifying the parts, and placing an order for the parts. Thus, the process is quite troublesome. Also, the user himself must input again or copy the parts number, resulting in erroneous input and erroneous order-placing.

### SUMMARY OF THE INVENTION

Accordingly, the present invention combine the prior art order-receiving system with the order-placing system that uses an image drawing so as to provide a convenience for the user of these two systems.

Also, in the present invention, while utilizing the order-receiving system of various manufacturers as it is, the coexistence of the order-receiving system and the order-placing system that uses an image drawing is made possible.

More specifically, a first aspect of the present invention provides a network system comprising an order-placing server for placing an order for parts using "an image drawing" and an order-receiving server having a log-in step, a retrieval step, a recognition step, and an order-placing step, characterized in that
the order-placing server comprises:
   a means for preparing "an order-placing page" corresponding to an order-placed destination for selected parts, and
   a means for transmitting "the order-placing page" to "the recognition step" of the order-receiving server; and
the order-receiving server comprises:
   a means for validating a log-in name included in "the order-placing page" sent to "the recognition step", and
   a means for recognizing the parts number included in the order-placing page to retrieve the part information of the parts number from a data base.

The above system allows the order-receiving server to receive an order as an order-receiving server and also receive a request from an order-placing system that uses an image drawing. On the other hand, when the identification of parts number is simple, the user can utilize a prior art order-placing system; and when the identification of parts number is complicated, such as a case of parts of a complex machine, the user can utilize the system that uses an image drawing. Further, the request of the order-placing for parts identified by the image drawing, as it is, can be shifted to the order-receiving system. This eliminates the conventionally required work to copy the parts number, preventing erroneous copying during order-placing.

"An image drawing" in the order-placing server is displayed on a display screen at the user's terminal, and by using the image drawing, the user can identify the required parts more easily than before. The form of the image drawing is not particularly limited, and an appropriate form that meets the system and the speed required for the display can be used.

The log-in step, retrieval step, recognition step, and order-placing step in the order-receiving server are respective steps in the order-receiving system that uses an existing home page and the like as described in the prior art. In the present invention, the transfer of "an order-placing page" refers to the transfer of various information (data) configuring the order-placing page.

Furthermore, the above-described order-receiving server may comprise a plurality of order-receiving servers in which the forms of "an order-placing page" are different from each other. This allows the user to place an order, as it is, for parts from the order-placing server using an image drawing to the order-receiving servers of a plurality of manufacturers. More specifically, the contents of the data sent from the order-placing page in the order-placing server can be matched with the form of respective order-receiving servers. Also, the manufactures may share the same order-placing server capable of transmitting an expensive image drawing, thereby allowing their burden to be reduced.

To execute the above-described system, a second aspect of the present invention provides an order-placing server for placing an order for parts using "an image drawing," the order-placing server has a means for preparing "an order-placing page" corresponding to an order-placed destination for selected parts, and a means for transmitting "the order-placing page" to "the recognition step" of the order-receiving server.

So as to correspond to the order-placing systems of a plurality of manufacturers, in the present invention the order-placing server may have a means for preparing "order-placing pages" corresponding to a plurality of order-placed destinations and a means for transmitting them to "the recognition step" of the plurality of order-receiving servers.

In a third aspect of the present invention, the order-placing server for placing an order for parts using "an image drawing" is characterized in that the order-placing server stores the order-placing page for an order-placed destination by bringing "the form of the order-placing page" into correspondence with the address of the transmitted destination to "the recognition step" of the order-receiving server for receiving the order.

Furthermore, a fourth aspect of the present invention provides an order-receiving server having a log-in step, a retrieval step, a recognition step, and an order-placing step in order to perform the above-described system and is characterized in that the order-receiving server comprises:
a means for validating a log-in name included in "the order-placing page" sent to a recognition step, and
a means for recognizing a part number included in the order-placing page to retrieve the parts information of the parts number from a data base.

The above-described order-receiving server may include a means for classifying the retrieved results of the parts number into "the parts immediately deliverable" and "the parts not immediately deliverable," and also displaying the parts. This allows the user to understand the delivery time of parts and determine whether those indicated as "the parts not immediately deliverable" are to be purchased or not. Further, if "a delivery time" is displayed, the determination of purchase can be more easily and appropriately made.

The order-receiving server may have a means for displaying "the number of stocks of parts thus retrieved" that allows the user to understand the number of immediately deliverable parts.

Further, " the order-placing page" is desirably in the form controlled by an Active Server Page (ASP). This allows the order-placing server to transmit the order-placing page without depending on a browser of the order-receiving server. In other words, it can be said that "the order-placing page" is desirably made as an ASP file.

### BRIEF DESCRIPTION OF THE DRAWINGS

Fig. 1 is a general view of the system according to the present invention;
Fig. 2 is a configuration view of an order-placing server;
Fig. 3 is a configuration view of an order-receiving server;
Fig. 4 is a display example of an order-placing page;
Fig. 5 is an order-placing example using an image drawing which is shown on a computer display;
Fig. 6 shows the flow of order-placing steps; and
Fig. 7 is a recognition display screen for order-placed parts;

### DETAILED DESCRIPTION OF THE PREFERRED EMBODIMENT

### A: System Overview

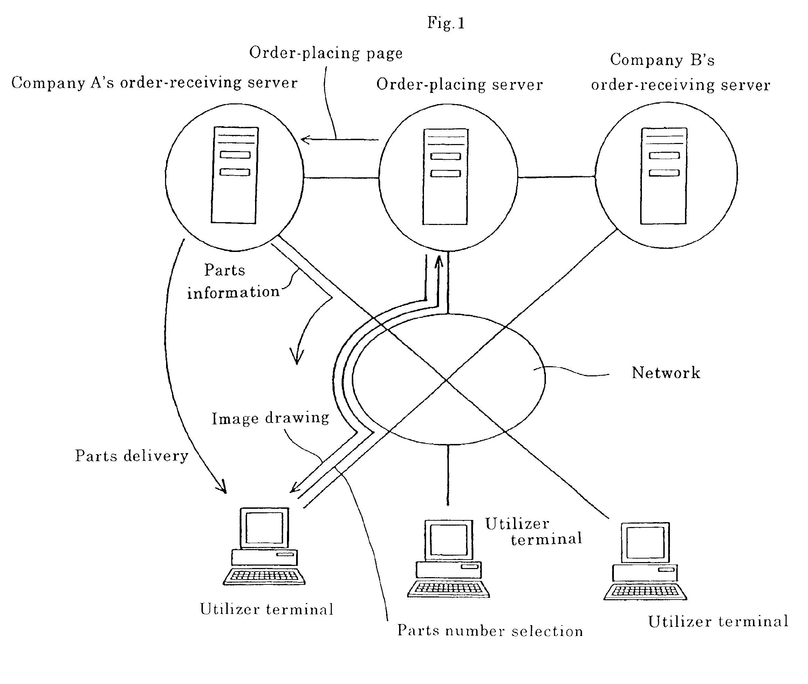

The whole system of the present invention is shown in Fig. 1. The system comprises "an order-placing server" and "order-receiving servers," these servers being connected through a network to user terminals so as to provide for a two-way transmission.

The "order-receiving servers" are servers on a manufacturer's side performing order-receiving and delivery of parts, which as described in the prior art section, perform respective steps such as a log-in step, a retrieval step of the parts, a recognition step, and an order-placing step as a manner of order-receiving. In this embodiment, the servers comprise the order-receiving server of company A and that of company B. The number of order-receiving servers is not limited, and the servers may comprise two or more order-receiving servers other than one.

In the present invention, "the order-placing server" does not mean a server for merely placing an order for parts. It means a server which allows the image drawing to be displayed on the user terminal, identifies parts by utilizing the image drawing, and places an order for parts thus identified.

The order-receiving server and the order-placing server are required to be connected to each other in a manner to be capable of being communicated. As the form of connection, other than in the form in which these servers are connected through the Internet, they may be connected in the form of LAN or WAN using a private line. Further, these two-kind servers are not required to be separated physically; and if they are of high-performance, they may be integrated and have divided functions.

The user terminal refers to a terminal used by those who utilize the system and place an order for parts, and the terminal can be a computer having an input device, a display unit and a control unit.

The above-described both servers and the user terminal are connected to each other in a manner to be capable of being communicated in two ways; and as a form of connection, other than the Internet, they may be connected by LAN or WAN using dedicated lines. Considering the utilization of existing facilities and the spread of the system, the Internet is desirable.

### B: Configuration of Server

The configuration of a server in the present invention will be described hereinafter.

### B1: Order-placing server

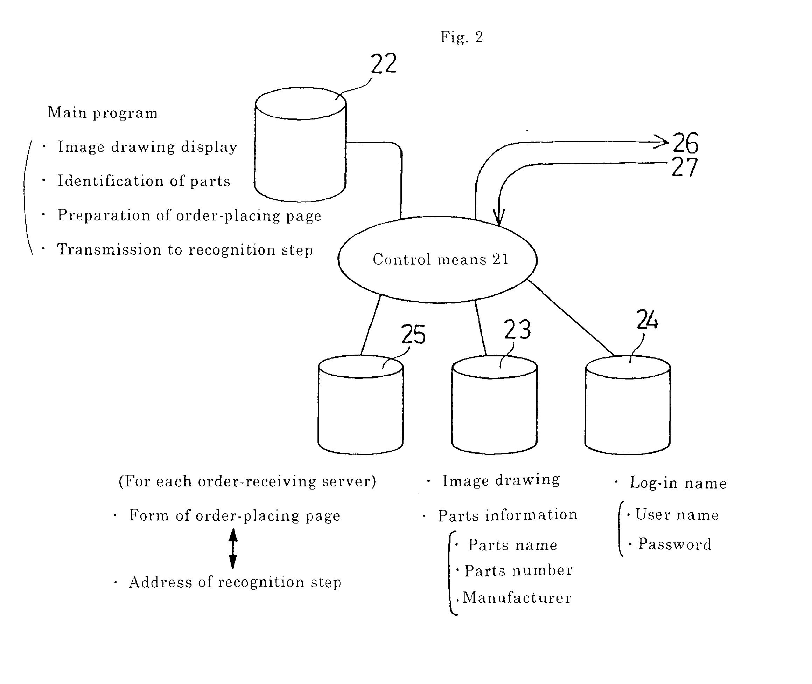

The configuration of an order-placing server is shown in Fig. 2. The order-placing server comprises a control means 21, storage means 22, 23, 24 and 25, an output means 26, and an input means 27.

The storage means 23 stores the information on parts for which an order is placed (parts information), such as an image drawing, various parts included in the image drawing, the parts name, and the name of manufacturers (such as company A, and company B) who place an order for the parts.

The storage means 24 stores a log-in name to identify the user of the system. The log-in name may be an information capable of identifying the user, that is, other than the name of the user, manufacturer name, the user name determined to utilize the system, and the like. In utilizing the system, when the input of a password is requested to prevent an illegal third party use, the password is desirably allowed to be included in the log-in name to be stored.

The storage means 25 stores "the form of the order-placing page" by bringing "the form of the order-placing page" different for each order-receiving server for parts into correspondence with "the address of the recognition step" of the respective order-receiving servers. The number of "the form of the order-placing page" to be stored is determined by the number of the order-receiving servers configuring the system. Hence, when utilized in a system in which a plurality of order-receiving servers are present, the order-placing server stores the form of "the order-placing page" corresponding to a plurality of order-placed destinations and "the address of the recognition step" for transmitting the order-placing page.

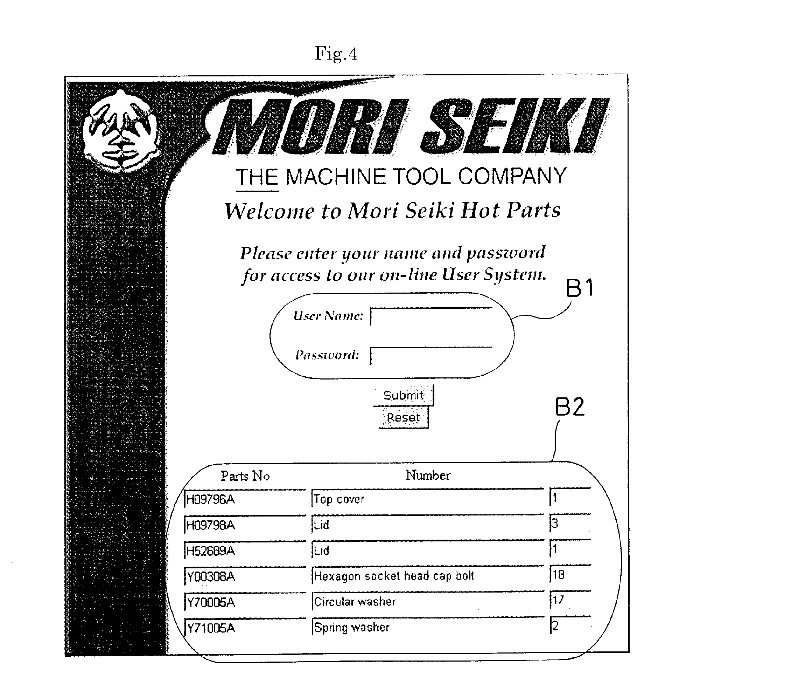

"The order-placing page" is a form of information used when an order is placed for parts from the order-placing server to an order-receiving server, the form being determined for each system of respective order-receiving servers. An example of "the order-placing page" is shown in Fig. 4. The order-placing page shown in Fig. 4 is prepared entirely in the HTML form. So as to convey to the order-receiving side that the order-placing side is a normal user, blanks B1 are provided so that the order-placing side is prompted to input "User name, Password" as a log-in name. The letters inputted into the blanks are controlled in ASP. Then, "the order-placing page" is sent to the order-receiving server. The item "Parts No" referred to by B2 in Fig. 4 is the parts number of parts for which an order is placed through this system, which will be described later.

The form of "the order-placing page" is freely determined for each order-receiving server, that is, for each manufacturer managing the order-receiving server. Therefore, other than a combination of the HTML form with ASP as shown Fig. 4, a form that is prepared entirely with the HTML form or that uses Java or other languages may be employed. Considering the ready visibility of displayed screen and the multi-purpose property of displayed form, the entire order-placing page is desirably prepared in the HTML form, while the portion of the page with respect to the user name and parts number is desirably prepared in ASP because of an easy processing.

The storage means 22 in Fig. 2 stores the following various programs:
(i) A program which displays an image drawing as in prior art and reads information on identified parts. This program is similar to that has been described in the prior art.
(ii) A program which prepares "the order-placing page". This program is a "means for preparing the order-placing page;" and to execute this program, it is necessary that the form of the order-placing page corresponding to the respective order-receiving servers be previously stored in the storage means 25. In preparing the order-placing page, according to which order-receiving server the order-placing page should be sent to, the form is read to prepare the page according to the form. At that time, which order-receiving server the order-placing page should be sent to is determined by parts selected by the user.
(iii) A program which transmits the prepared order-placing page to the recognition step of the order-receiving server. This program transmits "the order-placing page" to "the recognition step" of the order-receiving server. The order-placing server reads the address of the recognition step of the order-receiving server to which the order-placing page are to be transmitted from the storage means 25 according to parts selected, and transmits said order-placing page to the address. When there are a plurality of order-receiving servers, a plurality of recognition step addresses are stored in the storage means, so that the order-placing server reads the address corresponding to the transmitted destination and transmits the order-placing page to the address.

### B2: Order-receiving server

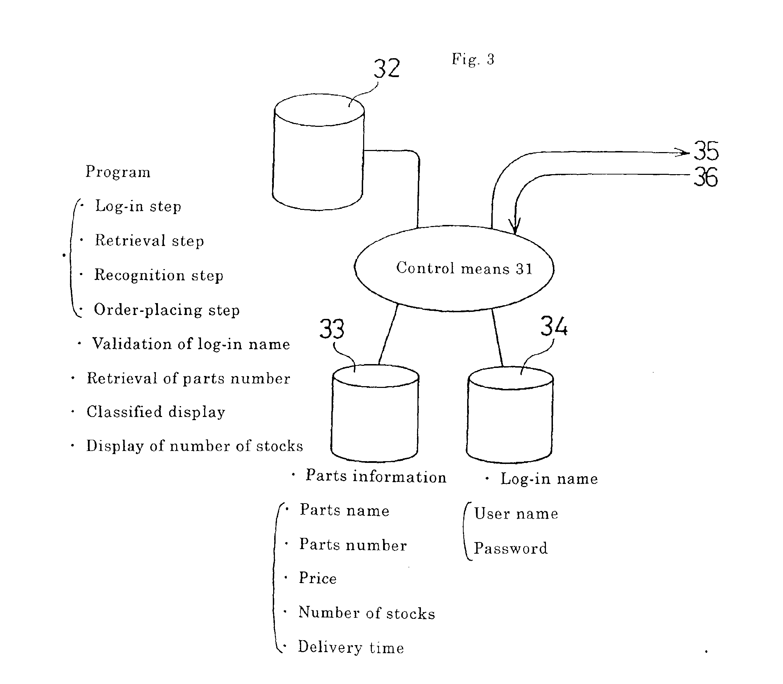

The order-receiving server is shown in Fig. 3. The order-receiving server comprises a control means 31, storage means 32, 33 and 34, an output means 35 and an input means 36.

The storage means 33 stores parts information. As the parts information, parts number, parts name, number of stocks, price, delivery time and the like are shown, thus the information beneficial to user is included.

The storage means 34 stores the log-in name to identify the user of the system and as in the order-placing server, the storage means 34 desirably has a form to store the "User name" and the "Password."

The storage means 32 stores programs that execute various steps for order-receiving such as the log-in step which has been performed heretofore.

The log-in step verifies whether the inputted user name and password match those stored in the storage means 34, and the process goes to the next step only when they match. In the present invention, the order-receiving server performs not only the request from the order-placing server but also the order-receiving from the log-in step as before.

The retrieval step is used to display the list of parts included in the parts category or in the price range on the user terminal in order to facilitate the identification parts by the user.

The recognition step reads parts information on the parts identified by the user from the storage means 33, allows the information to be displayed on the user terminal, and recognizes whether the parts are no doubt those identified. The parts information can include additionally the delivery time of the parts. For example, the additional information is "the delivery time of parts A is two weeks later." Further, with a certain period to be fixed, whether parts can be delivered within the period may be displayed at the step. Even parts, which are retrieved and desired by the user, are classified into "parts immediately deliverable" and "parts not immediately deliverable," thereby eliminating a trouble that an order is erroneously placed for parts not immediately deliverable. The classifying and displaying means can be designed so that only "parts immediately deliverable" is displayed on the screen to obtain the validation of the user. This allows the user to understand that parts having been retrieved but not displayed are those not immediately deliverable or those not in stock.

The period to determine whether parts can be immediately delivered can be individually decided by the user. In such a case, the determination can be performed so that "the delivery period" corresponding to the log-in name is stored in the storage means 34 and read each time in the recognition step.

The order-receiving step is a step up to the actual delivery of the parts recognized in the recognition step. This step recognizes the parts number and quantity from the parts information having been read and identifies an order-placed destination from the user name and the like in the log-in step. Then, the requested parts are delivered to the user.

Further, the storage means 32 stores "a program to validate the log-in name" included in the order-placing page having been sent to the recognition step from the order-placing server, as "means for validating the log-in name."

The fact that the order-placing page is sent to the recognition step means that the order-placing page is sent to the address of the page at the recognition step, for example, in a case where the order-receiving server performs various steps by utilizing the hierarchy of the home page. More specifically, the fact that the order-placing page is sent to the recognition step means that the order-placing page is sent directly to the address of the recognition step without passing through the log-in step and the retrieval step, in a case where while the address of the home page at the log-in step is a main address, sub-addresses are provided for the lower steps, that is, the retrieval and recognition steps to perform those steps. The relationship between the main address and the sub-addresses is shown in Fig. 6. As shown in Fig. 6, where the log-in step has the main address, for example, "http://www.A.com," the following steps are made hierarchical such that the retrieval steps has the sub-address name, "http://www.A.com.kensaku;" the recognition step has the sub-address name, "http://www.A.com.ninshiki;" and the order-placing step has the sub-address name, "http://www.A.com.jyutyu."

Since the order-placing page is sent directly from the order-placing server to the recognition step of the order-receiving server in the present invention, the user is not required to perform the log-in once again, thereby shortening the time and simplifying the procedure. The log-in names included in the order-placing page are the "User name" and its "Password" inputted in the order-placing page as shown in Fig. 4. Where the password is not verified in the order-placing and order-receiving servers, the password is not required.

The log-in name when logged in the order-placing server preferably matches the one when logged in the order-receiving server. However, even if it does not match, in the present invention the order-receiving server or the order-placing server is allowed to store respective log-in names by bringing the log-in name in the order-receiving server into correspondence with the log-in name in the order-placing server; and as required, the log-in name and the like in the order-placing server is rewritten into those in the order-receiving server.

"The program to validate the log-in name" comprises the following steps:

First, when the order-placing page has been directly sent to the recognition step, the control means 31 reads the log-in name from the order-placing page.

Then, whether a log-in name that matches the log-in name is present in the storage means 34 is retrieved.

When there is no log-in name that matches it, a display, "The user name is different" is given to terminate the procedure. On the other hand, when a log-in name that matches it is present, the procedure goes to the next step to recognize the parts name. When the order-placing page includes a password together with a user name as a log-in name, the password is also validated.

Further, the storage means 32 stores "a program to retrieve the parts number" described below as a means for recognizing parts number included in "the order-placing page" and retrieving the parts information on the parts number from the storage means 33. The order-receiving server recognizes the parts number included in the order-placing page, following the validation of the log-in name. The parts number included in the order-placing page means the number indicated in the order-placing page as shown in Fig. 4. In Fig. 4, the number is displayed as "Parts No," that is, as "H09796A, H09798A---." The parts number is obtained by combining appropriately letters, numerals and symbols to identify parts, and the form can be freely prepared by manufacturers. Parts name which are used to identify parts even though called the title of parts should represent the parts name in the present invention.

Then, the parts information of the parts number thus identified is transferred to the storage means 33 to read the parts information on the parts number. The parts information is sent by the output means 36 to the user terminal and displayed. After being displayed, the information is verified by the user, and the procedure shifts to the order-receiving step.

The storage means 32 may store a program (classified display) which classifies the results obtained by retrieving the parts number into "parts immediately deliverable" and "parts not immediately deliverable," thereby displaying the parts. The classified display program, with the clue to the parts number thus validated, reads the number of stocks for parts and delivery time from the storage means 33. When calculating the delivery time, where there is data of, for example, three days, the time of three days after the order-placing page was sent is calculated as the delivery time. The parts without stocks may be displayed with "undecided delivery time;" while for those with data of delivery time, the delivery time may be calculated from that data, and the calculated results be displayed on the user terminal. It may be designed so that parts with undecided delivery time is not displayed in the recognition step.

The storage means 32 may store a program (display of number of stocks) to "display the number of stocks" of parts retrieved from the retrieval results of the parts number. The program to display the number of stocks can be designed so that parts together with the number of stocks for the parts are retrieved and displayed on the user terminal.

When an instruction, "I want you to display the number of stocks for specific parts," is given from the user, the control means 31 may be designed so that the control means reads the number of stocks from the storage means 33 and outputs it to the user terminal.

Further, the execution can be performed so that the display form is changed according to the number of stocks. For example, when the number of stocks thus read is less than a certain number, the display form includes "the number of stocks is to be displayed with red characters" and "the number of stocks is to be flickered," together with a warning of "stocks are running short." In this manner, the user is allowed to know easily the status of stocks and recognize a dangerousness, "if the stocks are order-placed to the third party, you must wait for until the next arrival."

### C: Flow of Order-placing

The flow of order-placing for parts will be explained.

In the present invention, the order-receiving server can receive an order-placing request for parts also by the respective order-placing steps described above. The flow is shown in Fig. 6 as "normal order-placing step."

The order-receiving from the order-placing step that uses an image drawing will be described below.

First, the user accesses the order-placing server from the user terminal and moves to the order-placing step. The following description will be made under the condition that the user terminal is connected to the order-placing server, and after the order-placing page is transmitted to the order-receiving server, the user terminal is connected to the order-receiving server.

The user identifies a machine including wanted parts. The order-placing server reads the image drawing of the identified machine from the storage means 23 and displays the image drawing via the output means 26 on the user terminal in step S1. The displayed image drawing is shown in area (a) of Fig. 5.

As shown in the area (a) of Fig. 5, the image drawing represents the drawing of a machine consisting of various parts, and the parts with parts information are prompted to be identified with numerals which are encircled, the so-called "balloon numerals." A table corresponding to the balloon numerals is displayed in the upper right side area (b) in Fig. 5. From the numerals on the left side of the table, and the parts number, parts name, number of stocks and the like on the right side thereof, how many of which parts are order-placed is determined. This is the parts number selection step in step S2 in Fig. 6.

In step S3, the parts selected by the user are confirmed in the selected display screen in the lower right side area (c) in Fig. 5. In this embodiment, six parts having the parts number "H09796-Y71005A" are selected.

Then, the order-placing server prepares the order-placing page. In this embodiment, the selected parts are those from company A. Thus, "the form of the order-placing page" of the order-receiving server of company A is read from the storage means 25, and the control means 21 prepares the order-placing page according to the form in step S4. The display screen of the order-placing page is shown in Fig. 4. The order-placing page shown in Fig. 4 is prepared in the HTML form as a whole, and it is configured and controlled as the ASP. "The order-placing page" includes the "User name" and "Password" inputted as a log-in name in the area B1 and the portion where parts are displayed in the area B2.

Then, the order-placing server reads "the address of the recognition step" of company A from the storage means 25 and transmits the prepared order-placing page to the address. In this embodiment, the server transmits the order-placing page to the address of the recognition step, http://www.A.com.ninshiki. Now, where parts selected from the image drawing is intermingled with those from company A and those from company B, "the order-placing page preparation step" can be performed by preparing and transmitting the order-placing page for company A and those for company B, respectively.

Then, the order-receiving server to whose recognition step the order-placing page has been sent reads the validation program of the log-in name from the storage means 32, and the order-receiving server further reads the log-in name from the order-placing page by the control means 31. Then, the log-in name thus read is stored temporarily and transmitted to the storage means 34 for retrieval. When the same log-in name is present in the storage means 34, the order-receiving server regards the order-placing as an order-placing from the normal user, and the procedure proceeds to the next steps.

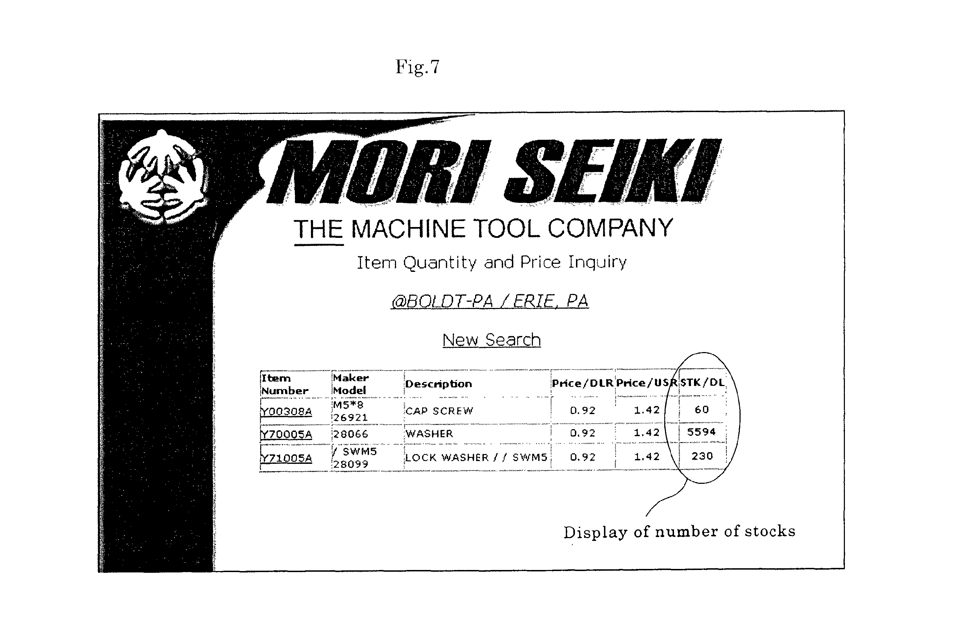

The control means 31 reads the retrieval program of the parts number from the storage means 32 and reads the parts number from the information included in the order-placing page. Then, the control means 31 reads the parts information corresponding to the parts number from the storage means 33. The parts information thus read is transmitted to the user terminal and displayed as shown in Fig. 7. In this embodiment, of the six parts included in the order-placing page, three parts are in the stock, so that the parts information on the three parts is displayed.

In executing the retrieval program of the parts number, the control means 31 reads the program to display the number of stocks from the storage means 32; and in retrieving the parts, at the same time, the control means 31 reads the number of stocks and displays the number of stocks on theuser terminal. In Fig. 7, the number of stocks is displayed as "STK/DL" at the right end of the table.

Then, using the screen displaying the parts information, the user recognizes parts which are to be order-placed in step S5 in Fig. 6. After the recognition by the user, the order-receiving server moves on to the order-receiving step S6. Then, the order-received parts are delivered to the user by a selected transportation means.

The present invention is for placing an order for "parts" of a machine shown in an image drawing. The term "parts" refers to those which individually make up a machine. However, the present invention is also used for a large machine built by combining a plurality of machines which are individually traded. The "large machine" includes, for example, a plant built by a plurality of machines. Thus, in such a case, the machines making the plant are the "parts" referred to in the present invention.

## Claims

1. A network system comprising an order-placing server for placing an order for parts using an image drawing, and an order-receiving server having a log-in step, a retrieval step, a recognition step, and an order-placing step; **characterized in that**:
the order-placing server is comprised of
a means for preparing an order-placing page corresponding to an order-placed destination for selected parts, and
a means for transmitting the order-placing page to a recognition step of the order-receiving server; and
the order-receiving server is comprised of
a means for validating a log-in name included in the order-placing page having been sent to said recognition step, and
a means for recognizing parts number included in the order-placing page to retrieve a part information of said parts number from a data base.

2. The network system according to claim 1, **characterized in that** said order-receiving server is configured by a plurality of order-receiving servers in which a form of the order-placing page is different from each other.

3. An order-placing server for placing an order for parts using an image drawing, **characterized in that** the order-placing server is comprised of means for preparing an order-placing page corresponding to an order-placed destination for selected parts, and means for transmitting the order-placing page to a recognition step of an order-receiving server.

4. The order-placing server according to claim 3, **characterized in that** the order-placing server has means for preparing order-placing pages corresponding to a plurality of order-placed destinations, and means for transmitting them to the recognition step of a plurality of order-receiving servers.

5. An order-placing server for placing an order for parts using an image drawing, **characterized in that** the order-placing server stores an order-placing page for an order-placed destination by bringing a form of an order-placing page into correspondence with an address of a transmitted destination to a recognition step of an order-receiving server for receiving an order.

6. An order-receiving server having a log-in step, a retrieval step, a recognition step, and an order-placing step; **characterized in that** the order-receiving server is comprised of:
a means for validating a log-in name included in a order-placing page having been sent to a recognition step, and
a means for recognizing a part number included in the order-placing page to retrieve parts information of said parts number from a data base.

7. The order-receiving server according to claim 6, **characterized in that** the order-receiving server is further comprised of means for classifying results obtained by retrieving said parts number into parts immediately deliverable and parts not immediately deliverable, thereby displaying the parts.

8. The order-receiving server according to claim 6, **characterized in that** the order-receiving server is further comprised of means for displaying the number of stocks of parts retrieved.

9. The order-receiving server according to claim 7, **characterized in that** the order-receiving server is further comprised of means for displaying the number of stocks of parts retrieved.
